# EUROPÄISCHE PATENTSCHRIFT

(11) **EP 1 561 366 B1**
(45) Veröffentlichungstag und Bekanntmachung des Hinweises auf die Patenterteilung: **24.05.2006**
(21) Anmeldenummer: 03782087.5
(22) Anmeldetag: 08.10.2003
(51) Int. Cl.: H05B 33/08, H05B 39/04

(54) **SCHALTUNGSANORDNUNG ZUM BETREIBEN MINDESTENS EINER LEUCHTDIODE**
CIRCUIT ARRANGEMENT FOR OPERATING AT LEAST ONE LIGHT-EMITTING DIODE
CIRCUIT PERMETTANT DE FAIRE FONCTIONNER AU MOINS UNE DIODE ELECTROLUMINESCENTE

(30) Priorität: 11.11.2002 DE 10252624
(43) Veröffentlichungstag der Anmeldung: 10.08.2005
(73) Patentinhaber: Conti Temic microelectronic GmbH, 90411 Nürnberg (DE)
(72) Erfinder: JOOS, Ulrich, 88149 Nonnenhorn (DE)
(86) Internationale Anmeldenummer: PCT/DE2003/003325
(87) Internationale Veröffentlichungsnummer: WO 2004/045250

(56) Entgegenhaltungen:
- DE-A- 10 013 207
- DE-U- 20 002 482

## Beschreibung

Die Erfindung betrifft eine Schaltungsanordnung zum Betreiben mindestens einer Leuchtdiode gemäß dem Oberbegriff des Patentanspruchs 1.

Leuchtdioden weisen typische Flußspannungen von 1.5 bis 3.5 Volt auf. Um Leuchtdioden in Stromkreisen mit einer höheren Betriebsspannung betreiben zu können müssen die Leuchtdioden vor zu hohen fließenden Strömen geschützt werden. Dieser Schutz kann in einfacher Weise durch in Serie geschaltete Halbleiterbauelemente oder Widerstände erfolgen, die jedoch zu hohen Verlustleistungen führen können. Ohne hohe Verlustleistungen können Leuchtdioden in Stromkreisen mit höheren Betriebsspannungen betrieben werden, indem getaktete Induktivitäten den Diodenstrom begrenzen. Derartige getaktete Induktivitäten erfordern jedoch einen hohen Schaltungsaufwand und sind dadurch eine aufwendige und kostspielige Alternative.

Um die Leuchtdiode mit einer entsprechenden Betriebsspannung zu versorgen, ist die Verwendung einer PWM-Steuerung in der Regel mit Zwischenschaltung von Glättungselementen, wie Kondensatoren bekannt, wie sie in Fig. 1 skizziert und beispielsweise aus der DE 100 13 207 oder DE 41 41 059 bekannt ist.

Es sind eine Reihe von Schaltungsanordnungen für den Betrieb mit einer 230-Volt-Wechselspannung bekannt, bei denen über eine Vollweggleichrichterschaltung die Leuchtdiode jeweils phasenrichtig versorgt wird (vgl. DE 23 04 620, JP 08137429, DE 200 02 482 U1, DE 100 54 212 A1.

Da jedoch insbesondere für die Anwendung in Kfz-Bordnetzen auch Kurzschlüsse nicht ausgeschlossen werden können, soll daher eine Schaltungsanordnung zum Betreiben mindestens einer Leuchtdiode gemäß dem Oberbegriff des Patentanspruchs 1 angegeben werden, die den zuverlässigen und langlebigen Betrieb der Leuchtdiode auch bei Kurzschlüssen ermöglicht und dabei kostengünstig herzustellen ist.

Diese Aufgabe wird erfindungsgemäß durch die Merkmale des Patentanspruchs 1 gelöst.

Die Vollweggleichrichterschaltung am Ausgang der LED-Treiberstufe und der symmetrische Aufbau der Reaktanzen ermöglicht in Verbindung mit dem zusätzlichen Schaltmittel einen Betrieb auch für den Fall eines Kurzschlusses an der LED auf Masse oder Betriebsspannung.

Das pulsweitenmodulierte Signal ist zur Pegelanpassung mit der Basis eines Pegeltransistors der Schaltungsanordnung verbunden, dessen Kollektor mit der Masse und dessen Emitter mit der Betriebsspannung sowie mit den Basen eines ersten Whiteschen Emitterfolger zur Stromverstärkung verbunden ist. Der erste Whiteschen Emitterfolger ist im wesentlichen aus einem ersten NPN Transistor und einem ersten PNP Transistor aufgebaut, wobei der Emitter des ersten NPN Transistors mit dem Emitter des ersten PNP Transistors und mit dem ersten Widerstand verbunden ist. Zudem ist der Kollektor des ersten NPN Transistors mit der Betriebsspannung der Schaltungsanordnung verbunden. Der Kollektor des ersten PNP Transistors ist mit der Masse des Stromkreises verbunden. Der erste Widerstand bildet zusammen mit der ersten Kapazität die den Stromfluß durch die Leuchtdiode begrenzende Reaktanz. Zwischen der ersten Kapazität und der mindestens einen Leuchtdiode ist eine Schutzschaltung ausgebildet, welche einen Stromfluß zur Masse sperrt.

In einer vorteilhaften Weiterbildung der Erfindung ist vorgesehen, daß zur Begrenzung der Anstiegszeiten des in der Pulsweite modulierten, und im Strom verstärkten Signals ein zweiter Whiteschen Emitterfolger aus einem zweiten NPN Transistor und einem zweiten PNP Transistor zwischen dem ersten Widerstand und über einen zweiten Widerstand mit den Emittern des ersten Whiteschen Emitterfolger verbunden ist. Dabei ist zwischen dem zweiten Widerstand und den Basen des zweiten Whiteschen Emitterfolgers ein zweiter Kondensator mit der Masse verbunden.

In einer nächsten Weiterbildung der Erfindung ist vorgesehen, daß der Pegeltransistor und/oder der erste NPN Transistor und/oder der erste PNP Transistor und/oder der zweite NPN Transistor und/oder der zweite PNP Transistor als Metalloxid- Feldeffekt- Transistoren ausgebildet sind.

Der Betrieb und die Ansteuerung der mindestens einen Leuchtdiode mittel Pulsweitenmodulation ist erfindungsgemäß bei symmetrisch als auch unsymmetrisch ausgebildeten Stromkreisen möglich. Bei einer unsymmetrisch aufgebauten Schaltungsanordnung liegt die Masse auf Null Volt. Bei einer symmetrisch aufgebauten Schaltungsanordnung weist die Masse den negativen Wert der Betriebsspannung auf.

Durch die so ausgebildete Schaltungsanordnung ist der Betrieb der mindestens einen Leuchtdiode in Stromkreisen mit wesentlich höheren Betriebsspannungen möglich, ohne daß die mindestens eine Leuchtdiode degradiert. Dabei ist die Schaltungsanordnung kostengünstig herzustellen.

Im folgenden soll die erfindungsgemäße Schaltungsanordnung zum Betreiben der mindestens einen Leuchtdiode anhand von einem Ausführungsbeispiel im Zusammenhang mit zwei Figuren beschrieben und erläutert werden.

Es zeigen:
- Figur 1: eine Darstellung der Schaltungsanordnung aus Pegelanpassung, Stromverstärker, Reaktanz und einer als Schutzdiode ausgebildeten Schutzschaltung gemäß dem Stand der Technik,
- Figur 2: eine Darstellung der Schaltungsanordnung aus Pegelanpassung, Stromverstärker, Reaktanz, einer Schaltung zur Begrenzung der Anstiegszeiten des pulsweitenmodulierten Signals und einer als Vollweggleichrichterschaltung ausgebildeten Schutzschaltung.
- Figur 3: allgemeines Funktionsprinzip bei Kurzschluß

Moderne Kraftfahrzeuge weisen eine Betriebsspannung beispielsweise von 12 bis 42 Volt auf. Beispielsweise bei Schaltern oder Anzeigen werden als Leuchtmittel vorteilhaft eine oder zwei Leuchtdioden verwendet, die eine Flußspannung von ca. 2,5 Volt aufweisen. Um die Leuchtdioden in Stromkreisen bspw. mit 42 Volt betreiben zu können werden Schaltungsanordnungen verwendet, bei denen die Strombegrenzung für die Leuchtdiode von einer Reaktanz gebildet wird, die von einem Widerstand und einem Kondensator gebildet wird.

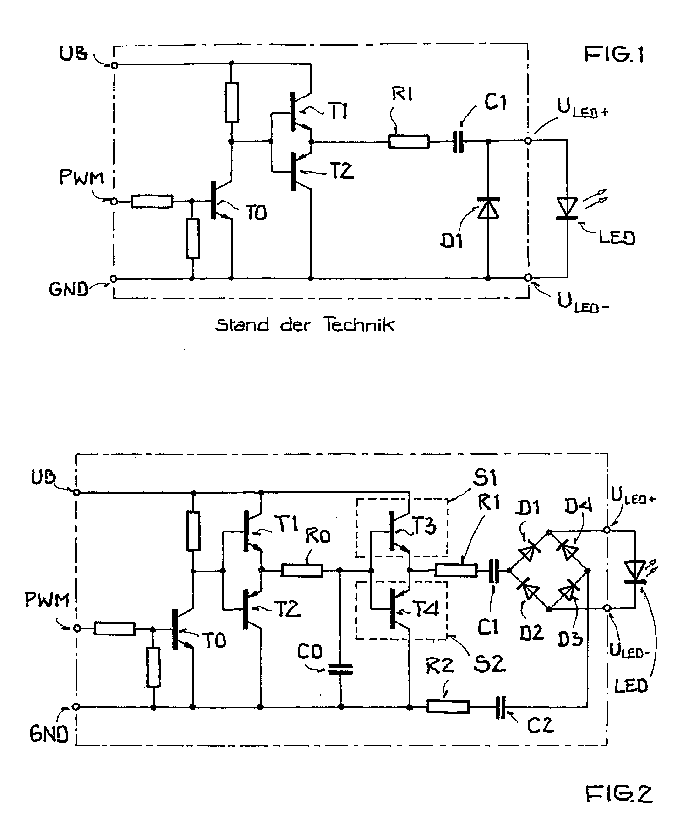

In der Figur 1 ist eine derartig, einfach ausgebildete Schaltungsanordnung gemäß dem Stand der Technik für eine einzelne Leuchtdiode LED dargestellt. Die Einstellung des durch die Leuchtdiode LED fließenden Stromes erfolgt mittels Pulsweitenmodulation. Das pulsweitenmodulierte Signal PWM ist zur Pegelanpassung mit der Basis eines Pegeltransistors T0 verbunden, dessen Kollektor mit der Masse GND und dessen Emitter mit der Betriebsspannung UB sowie mit den Basen eines ersten Whiteschen Emitterfolger verbunden ist. Der erste Whiteschen Emitterfolger dient der Stromverstärkung bzw. der Impedanzwandlung und ist im wesentlichen aus einem ersten NPN Transistor T1 und einem ersten PNP Transistor T2 aufgebaut. Der Emitter des ersten NPN Transistors T1 ist mit dem Emitter des ersten PNP Transistors T2 und mit dem ersten Widerstand R1 verbunden. Zudem ist der Kollektor des ersten NPN Transistors T1 mit der Betriebsspannung UB der Schaltungsanordnung verbunden. Der Kollektor des ersten PNP Transistors T2 ist mit der Masse GND verbunden. Der erste Widerstand R1 bildet zusammen mit der ersten Kapazität C1 die den Stromfluß durch die Leuchtdiode LED begrenzende Reaktanz. Zwischen der ersten Kapazität C1 und der Leuchtdiode LED ist als Schutzschaltung eine Schutzdiode D1 ausgebildet, welche den Stromfluß zur Masse GND sperrt.

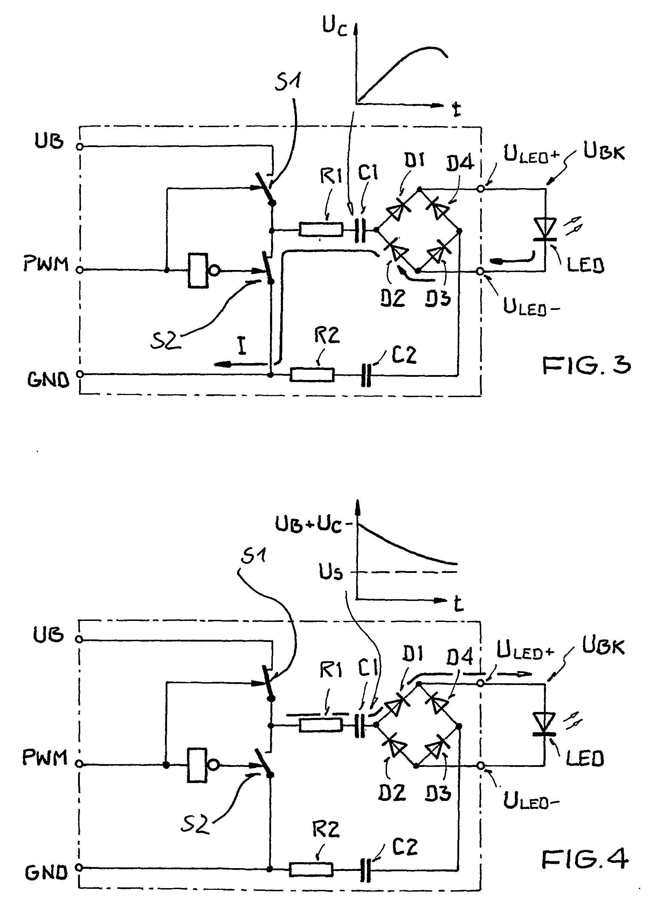

In der Figur 2 ist eine erfindungsgemäße Schutzschaltung dargestellt, welche ebenfalls den Pegeltransistor T0 zur Pegelanpassung und den ersten Whiteschen Emitterfolger zur Stromverstärkung bzw. Impedanzwandlung aufweist. Zusätzlich ist zur Begrenzung der Anstiegszeiten des in der Pulsweite modulierten Signals PWM ein zweiter Whitescher Emitterfolger aus einem zweiten NPN Transistor T3 und einem zweiten PNP Transistor T4 zwischen dem ersten Widerstand R1 und über einen zweiten Widerstand R0 mit den Emittern des ersten Whiteschen Emitterfolger verbunden. Dabei ist zwischen dem dritter Widerstand R0 und den Basen des zweiten Whiteschen Emitterfolgers ein dritter Kondensator C0 mit der Masse GND verbunden. Als Transistoren für den ersten und den zweiten Whiteschen Emitterfolger werden Metalloxid- Feldeffekt-Transistoren verwendet.

Die Schutzschaltung ist als Vollweggleichrichterschaltung aus ersten Diode D1, der zweiten Diode D2, der dritten Diode D3 und der vierten Diode D4 ausgebildet. Dabei ist die erste Diode D1 in Flußrichtung mit dem Pluspol U_{LED+} der Leuchtdiode LED und mit der zweiten Diode D2 verbunden. Die zweite Diode D2 ist in Sperrichtung mit der Masse GND und mit der dritten Diode D3 verbunden. Die dritte Diode D3 ist in Sperrichtung mit dem Minuspol U_{LED-} der Leuchtdiode LED und mit der vierten Diode D4 verbunden. Die vierte Diode D4 ist in Flußrichtung mit der ersten Diode D1 und mit dem ersten Kondensator C1 verbunden. Dabei ist zwischen der Vollweggleichrichterschaltung und dem Masseanschluß des Kollektors des zweiten PNP Transistors T4 des zweiten Whiteschen Emitterfolgers eine weitere Reaktanz aus den zweiten Wiederstand R2 und dem zweiten Kondensator C2 angeordnet.

Grundsätzlich lässt sich die Schaltung auch mit anderen Schaltmitteln, wie beispielsweise komplett mit Feldeffekttransistoren oder dergleichen aufbauen.

Die in Figur 1 und in Figur 2 dargestellten Schaltungsanordnungen sind unsymmetrisch aufgebaut, wobei die Betriebsspannung UB 42 Volt beträgt und die Masse GND eine Spannung von Null Volt aufweist. Ebenso könnten die Schaltungsanordnungen symmetrisch aufgebaut sein, wobei beide Anschlüsse gegenphasig zwischen Batteriespannung UB und Masse GND schalten. Durch diese Anordnung kann der Strom in der Leuchtdiode LED über einen größeren Betriebsspannungsbereich konstant gehalten werden.

Durch die so ausgebildete Schaltungsanordnung ist der Betrieb der Leuchtdiode LED bei der wesentlich höheren Betriebsspannungen UB bspw. von 42 Volt möglich, ohne daß die Leuchtdiode LED degradiert.

Die Kurzschlussfestigkeit der Schaltung soll anhand der nachfolgenden Figur 3 noch kurz erläutert werden.

Betrachtet man einen Kurzschluß am Pluspol U_{LED+} der LED zur Betriebsspannung UB hin, wie in Fig. 3 angedeutet, so wird die zweite Reaktanz C2/R2 zunächst unmittelbar über die Diode D3 auf die Betriebsspannung aufgeladen und sperrt die Diode D3 nachfolgend diesen Zweig. Die Ansteuerung erfolgt nunmehr einzig über die erste Reaktanz C1,R1, die sich bei geöffnetem oberen Schaltmittel S1 und geschlossenem Schaltmittel S2 aus dem Kurzschluß von dem Pluspol der LED über die Diode D3 nach Masse hin auflädt, wobei der Verlauf des Ladestroms I in Fig. 3 skizziert ist.

Wird im nächsten Takt das Schaltmittel S2 geöffnet und S1 geschlossen, tritt aufgrund des aufgeladenen C1, wie in Fig. 4 skizziert, an der Anode von D1 eine Spannung (UB+Uc) oberhalb der Betriebsspannung auf, da sich die Betriebsspannung UB und die im Kondensator C1 gespeicherte Ladung überlagern. Dadurch wird die Diode D1 leitend und kann sich C1 in den Kurzschluß entladen. Dank dieser Entladung kann C1 sich beim erneuten Schließen von S2 und geöffnetem S1 erneut aufladen. Da die Taktfrequenz der PWM in der Regel ausserhalb des für das menschliche Auge erkennbaren Frequenzbereichs gewählt wird, sind die Phasen des Erlöschens der LED praktisch nicht wahrnehmbar.

Betrachtet man den Kurzschluß auf Betriebsspannung am Minuspol U_{LED-} der LED, so wird wiederum C2 auf UB aufgeladen und sperrt nachfolgend. Ist S2 geschlossen, kann sich C1 aus dem Kurzschluß über D2 nach Masse hin aufladen und gibt diese Ladung nach dem Öffnen von S2 und Schließen von S1 über die D1 und die LED wieder an den Kurzschluß ab.

Ein Kurzschluß auf Masse am Minuspol U _{LED-} der LED führt dazu, dass in beiden Betriebsphasen der Stromfluß über C1 und D1 erfolgt und D3 gesperrt ist.

Ein Kurzschluß auf Masse am Pluspol führt bei geschlossenem S1 zu einer Aufladung von C1 über D1 auf die Kurzschluß-Masse hin. Wird nun S1 geöffnet und S2 geschlossen, kommt es zu einem Stromfluss vom negativen Pol von C1 über die D2 und die LED in den Masse-Kurzschluß.

## Patentansprüche

1. Schaltungsanordnung zum Betreiben mindestens einer Leuchtdiode (LED) in einem Stromkreis mit einer Betriebsspannung (UB), die höher ist als die Flußspannung der zu betreibenden mindestens einen Leuchtdiode (LED),
• wobei die Einstellung des durch die Leuchtdiode (LED) fließenden Stromes mittels Pulsweitenmodulation eines ersten Schaltmittels (S1) erfolgt, weiches zwischen einem ersten Pol der Betriebsspannung (UB) und einem Abgriff geschaltet ist
• zwischen dem Abgriff und einem ersten Anschluß der mindestens einen Leuchtdiode (LED) eine von ersten Widerstand (R1) und ersten Kondensator (C1) gebildete erste Reaktanz angeordnet ist,
**dadurch gekennzeichnet, dass**
• der zweite Anschluß der mindestens einen Leuchtdiode (LED) über eine von zweiten Widerstand (R2) und zweiten Kondensator (C2) gebildete zweite Reaktanz mit dem zweiten Pol der Betriebsspannung verbunden ist,
• wobei zwischen den beiden Anschlüssen der zumindest einen Leuchtdiode (LED) und den beiden Reaktanzen (R1-C1,R2-C2) eine Vollweggleichrichter-Diodenbrücke aus vier Dioden (D1,D2,D3,D4) geschaltet ist, und
• an dem Abgriff zwischen dem ersten Schaltmittel (S1) und der ersten Reaktanz eine über ein zweites Schaltmittel (S2) schaltbare Verbindung zum zweiten Pol der Betriebsspannung besteht, wobei das zweite Schaltmittel (S2) im Gegentaktbetrieb zum ersten Schaltmittel (S1) betrieben wird.

2. Schaltungsanordnung nach Anspruch 1, **dadurch gekennzeichnet**, die Betriebsspannung eine Gleichspannung ist und am ersten Pol die Betriebsspannung und am zweiten Pol das Massepotential anliegt und die Vollweggleichrichterschaltung aus vier Dioden (D1,D2,D3,D4) ausgebildet ist, wobei die Dioden wie folgt verschaltet sind:
• die erste Diode (D1) ist in Flußrichtung gepolt und zwischen die erste Reaktanz (R1-C1) und den Pluspol (U_{LED+}) der Leuchtdiode (LED) geschaltet,
• die zweite Diode (D2) ist in Sperrrichtung gepolt und zwischen die erste Reaktanz (R1-C1) und den Minuspol (U_{LED-}) der Leuchtdiode (LED) geschaltet,
• die dritte Diode (D3) ist in Flußrichtung gepolt und zwischen die zweite Reaktanz (R2-C2) und den Minuspol (U_{LED-}) der Leuchtdiode (LED) geschaltet
• die vierte Diode (D4) ist in Sperrichtung gepolt und zwischen die zweite Reaktanz (R2-C2) und den Pluspol (U_{LED+}) der Leuchtdiode (LED) geschaltet.

3. Schaltungsanordnung nach Anspruch 2, **dadurch gekennzeichnet, dass** in den Schaltmitteln das in der Pulsweite modulierte Signal (PWM) zur Pegelanpassung mit der Basis eines Pegeltransistors (T0) der Schaltungsanordnung verbunden ist, dessen Kollektor mit der Masse (GND) und dessen Emitter mit der Betriebsspannung (UB) sowie mit den Basen eines ersten Whiteschen Emitterfolger zur Stromverstärkung verbunden ist, der im wesentlichen aus einem ersten NPN Transistor (T1) und einem ersten PNP Transistor (T2) aufgebaut ist, wobei der Emitter des NPN Transistors (T1) mit dem Emitter des PNP Transistors (T2) und mit dem ersten Widerstand (R1) verbunden ist, und wobei der Kollektor des NPN Transistors (T1) mit der Betriebsspannung (UB) verbunden ist, und der Kollektor des PNP Transistors (T2) mit der Masse (GND) verbunden ist.

4. Schaltungsanordnung nach Anspruch 3, **dadurch gekennzeichnet, daß** zur Begrenzung der Anstiegszeiten des in der Pulsweite modulierten, und im Strom verstärkten Signals (PWM) ein zweiter Whitescher Emitterfolger aus einem zweiten NPN Transistor (T3) und einem zweiten PNP Transistor (T4) zwischen dem ersten Widerstand (R1) und über einen weiteren Widerstand (R0) mit den Emittern des ersten Whiteschen Emitterfolger verbunden ist, wobei zwischen dem weiteren Widerstand (R0) und den Basen des zweiten Whiteschen Emitterfolgers ein zweiter Kondensator (C0) mit der Masse (GND) verbunden ist.

5. Schaltungsanordnung nach einem der Ansprüche 1 bis 5, **dadurch gekennzeichnet, daß** der Pegeltransistor (T0) und/oder der erste NPN Transistor (T1) und/oder der erste PNP Transistor (T2) und/oder der zweite NPN Transistor (T3) und/oder der zweite PNP Transistor (T4) als Metalloxid- Feldeffekt- Transistoren ausgebildet sind.

## Claims

1. A switch arrangement for operating at least one light diode (LED) in a circuit, with an operating voltage (UB) which is higher than the flow voltage of the minimum of one light diode (LED) which is to be operated,
• whereby the setting of the current flowing through the light diode (LED) is made using pulse width modulation of a first switching agent (S1), which is switched between a first pole of the operating voltage (UB) and a tap
• between the tap and a first connection of at least one light diode (LED), a reactance is arranged which is formed by a first resistance (R1) and a first capacitor (C1),
**characterised in that**
• the second connection of at least one light diode (LED) is connected via a second reactance which is formed from a second resistance (R2) and a second capacitor (C2) to the second pole of the operating voltage,
• whereby between the two connections of at least one light diode (LED) and the two reactances (R1-C1, R2-C2), a full way rectifier-diode bridge of four diodes (D1, D2, D3, D4) is switched, and
• on the tap between the first switching agent (S1) and the first reactance, a switchable connection exists via a second switching agent (S2) to the second pole of the operating voltage, whereby the second switching agent (S2) is operated in counter-tact mode to the first switching agent (S1).

2. A switch arrangement according to claim 1, **characterised in that** the operating voltage is a direct voltage, and that it is applied on the first pole of the operating voltage and on the second pole of the mass potential, and that the full way rectifier is formed of four diodes (D1, D2, D3, D4), whereby the diodes are switched as follows:
• The first diode (D1) is poled in the flow direction and switched between the first reactance (R1-C1) and the plus pole (U_{LED+}) of the light diode (LED)
• The second diode (D2) is poled in the blocking direction and is switched between the first reactance (R1-C1) and the minus pole (U_{LED-}) of the light diode (LED)
• The third diode (D3) is poled in the flow direction and is switched between the second reactance (R2-C2) and the minus pole (U_{LED-}) of the light diode (LED)
• The fourth diode (D4) is poled in the blocking direction and is switched between the second reactance (R2-C2) and the plug pole (U_{LED+}) of the light diode (LED)

3. A switch arrangement according to claim 2, **characterised in that** in order to adjust the level, the pulse width modulated (PWM) signal is connected with the basis in the switching agent of a level transistor (T0) of the switching arrangement, the collector of which is connected with the mass (GND) and the emitter of which is connected with the operating voltage (UB) and with the bases of a first White emitter-follower for amplifying the current, which is essentially formed from a first NPN transistor (T1) and a first PNP transistor (T2), whereby the emitter of the NPN transisotr (N1) is connected with the emitter of the PNP transistor (T2) and with the first resistance (R1), and the collector of the PNP transistor (T2) is connected with the mass (GND).

4. A switch arrangement according to claim 3, **characterised in that** in order to restrict the build-up time of the signal (PWM) which is modulated in the pulse width and which is amplified in the current, a second White emitter-follower from a second NPN transistor (T3) and a second PNP transistor (T4) is connected with the emitters of the first White emitter-follower between the first resistance (R1) and via an additional resistance (R0), whereby between the additional resistance (R0) and the bases of the second White emitter-follower, a second capacitor (C0) is connected with the mass (GND).

5. A switch arrangement according to any one of claims 1 to 5, **characterised in that** the level transistor (T0) and/or the first NPN transistor (T1) and/or the first PNP transistor (T2) and/or the second NPN transistor (T3) and/or the second PNP transistor (T4) are formed as metallic oxide field-effect transistors.

## Revendications

1. Agencement de circuit pour l'exploitation d'au moins une diode lumineuse (LED) dans un circuit avec une tension de service (UB) qui est supérieure à la tension d'écoulement d'une diode lumineuse (LED) au moins au nombre de un à exploiter,
• le réglage du courant traversant la diode lumineuse (LED) s'effectuant au moyen de la modulation de largeur d'impulsion d'un premier moyen de commutation (S1) qui est monté entre un premier pôle de la tension de service (UB) et une prise
• une première réactance composée de la première résistance (R1) et du premier condensateur (C1) étant disposée entre la prise et une première connexion de la diode lumineuse (LED) au moins au nombre de un,
**caractérisé en ce que**
• la deuxième connexion de la diode lumineuse (LED) au moins au nombre de un est connectée, via une deuxième réactance composée de la deuxième résistance (R2) et du deuxième condensateur (C2), au deuxième pôle de la tension de service,
• un pont de diodes de redresseur à deux alternances composé de quatre diodes (D1, D2, D3, D4) étant monté entre les connexions de la diode lumineuse (LED) au moins au nombre de un et les deux réactances (R1-C1, R2-C2), et
• **en ce qu'**il existe, sur la prise entre le premier moyen de commutation (S1) et la première réactance, une connexion, commutable via un deuxième moyen de commutation (S2), au deuxième pôle de la tension de service, le deuxième moyen de commutation (S2) étant exploité dans le mode push-pull par rapport au premier moyen de commutation (S1).

2. Agencement de circuit selon la revendication 1, **caractérisé en ce que** la tension de service est une tension continue et **en ce que** la tension de service est présente sur le premier pôle, et le potentiel de masse est présent sur le deuxième pôle, et le circuit redresseur à deux alternances est constitué de quatre diodes (D1, D2, D3, D4), les diodes étant câblées comme suit :
• la première diode (D1) est polarisée dans le sens de passage et montée entre la première réactance (R1-C1) et le pôle plus (U_{LED+}) de la diode lumineuse (LED),
• la deuxième diode (D2) est polarisée dans le sens bloquant et montée entre la première réactance (R1-C1) et le pôle moins (U_{LED-}) de la diode lumineuse (LED),
• la troisième diode (D3) est polarisée dans le sens de passage et montée entre la deuxième réactance (R2-C2) et le pôle moins (U_{LED-}) de la diode lumineuse (LED),
• la quatrième diode (D4) est polarisée dans le sens bloquant et montée entre la deuxième réactance (R2-C2) et le pôle plus (U_{LED+}) de la diode lumineuse (LED),

3. Agencement de circuit selon la revendication 2, **caractérisé en ce que** le signal (PWM) modulé en largeur d'impulsion dans le moyen de commutation est, pour l'adaptation de niveau, connecté à la base du transistor de niveau (T0) de l'agencement de circuit dont le collecteur est connecté à la masse (GND) et dont l'émetteur est connecté à la tension de service (UB) ainsi qu'aux bases d'un premier émetteur suiveur de White, pour l'amplification de courant, qui est essentiellement constitué d'un premier transistor NPN (T1) et d'un premier transistor PNP (T2), l'émetteur du transistor NPN (T1) étant connecté à l'émetteur du transistor PNP (T2) et à la première résistance (R1), et le collecteur du transistor NPN (T1) étant connecté à la tension de service (UB), et le collecteur du transistor PNP (T2) étant connecté à la masse (GND).

4. Agencement de circuit selon la revendication 3, **caractérisé en ce que**, pour la limitation des temps de montée du signal (PWM) modulé en largeur d'impulsion et amplifié en tension, un deuxième émetteur suiveur de White, constitué d'un deuxième transistor NPN (T3) et d'un deuxième transistor PNP (T4) est connecté, entre la première résistance (R1) et via une autre résistance (R0), aux émetteurs du premier émetteur suiveur de White, un deuxième condensateur (C0) étant connecté à la masse (GND) entre l'autre résistance (R0) et les bases du deuxième émetteur suiveur de White.

5. Agencement de circuit selon une des revendications 1 à 5, **caractérisé en ce que** le transistor de niveau (T0) et/ou le premier transistor NPN (T1) et/ou le premier transistor PNP (T2) et/ou le deuxième transistor NPN (T3) et/ou le deuxième transistor PNP (T4) sont constitués en tant que transistor à effet de champ à grille isolée par oxyde métallique.
